# EUROPEAN PATENT APPLICATION

(11) **EP 3 210 740 A1**
(43) Date of publication of application: **30.08.2017**
(21) Application number: 15852318.3
(22) Date of filing: 23.10.2015
(51) Int. Cl.: B29C 45/14, B29C 45/06, B29K 105/20

(54) **VERTICAL INJECTION MOLDING MACHINE AND MOLDING METHOD FOR COMPOSITE MOLDING USING VERTICAL INJECTION MOLDING MACHINE**

(30) Priority: 24.10.2014 JP 2014217621
(71) Applicant: Toyo Machinery & Metal Co. Ltd., Akashi-shi, Hyogo 674-0091 (JP)
(72) Inventor: OKAZAKI Masanori, Akashi-shi Hyogo 674-0091 (JP); INOUE Akira, Akashi-shi Hyogo 674-0091 (JP)
(74) Representative: Schön, Christoph
(86) International application number: PCT/JP2015/079997
(87) International publication number: WO 2016/063979

(57) **Abstract**

When integrally molding a thermoplastic resin that is to become the main body of the product and a fiber resin base material, the present invention limits the occurrence of defective molding in said integrally molded composite molding. A vertical injection molding machine 1: is provided with a rotary table 7, the direction of the shaft center of which is the vertical direction and which is provided so as to rotate freely, a lower mold provided on the upper surface of the rotary table 7, and an upper mold that is clamped and unclamped from said lower mold; and clamps and unclamps the molds in the vertical direction. The vertical injection molding machine is provided with a robot 5 for loading a flat section of a fiber resin base material 21 on the lower mold so as to face same, and a heater 14 for heating the fiber resin base material 21 loaded on the lower mold. When the flat section of the fiber resin base material 21 facing the lower mold is called the lower surface and the opposite surface is called the upper surface, the upper surface/lower surface direction of the fiber resin base material 21 is set to be the vertical direction, which matches the clamping/unclamping direction for the upper mold with the lower mold. As a result, it is possible to provide the fiber resin base material 21 integrally at a specified position of the product main body 20.

## Description

### [Field of the Invention]

This invention relates to a vertical injection molding machine having a mold comprising an upper mold and a lower mold for opening and closing the mold in a vertical direction, and to a method of molding composite molded parts in the vertical injection molding machine. This invention also relates to a vertical injection molding machine for injecting and filling resin to be a product body from an injection nozzle to a cavity of the mold against a fiber resin base material mounted in the mold, which is integrally molded with the product body resin, and manufacturing composite molded parts, and to a method of molding the composite molded parts by using the vertical injection molding machine. In particular, this invention relates to a vertical injection molding machine for injecting and filling resin to be the product body from the injection nozzle to a cavity of the mold against a long fiber resin sheet mounted in the mold, which is integrally molded with the product body resin, and manufacturing composite molded parts, and to a method of molding the composite molded parts by using the vertical injection molding machine.

### [Description of the Related Art]

A conventional and common injection molding machine is designed to manufacture molded parts by sending granular thermoplastic resin as a material to a heating cylinder, sending out a predetermined amount of molten resin to a nozzle of an end part of a screw while melting the resin by rotation of a screw provided in the heating cylinder, injecting molten resin in a clamped mold cavity from an injection nozzle provided at the end part of the screw by forwarding the screw, and taking out solidified molded parts from the mold.

In a recent year, in order to achieve high degree of hardness of the molded parts, there has been spread a technology of manufacturing the molded parts consisting of not only thermoplastic resin, as materials of the molded parts, but a composite material such as carbon fiber reinforced plastic (CFRP) mixing carbon fiber to thermoplastic resin. Patent Document 1, which relates to such conventional technology, discloses a plasticizing device for kneading and mixing fiber reinforcing thermoplastic resin made by mixing thermoplastic resin and reinforcing fiber in a heating cylinder by rotation of a screw, after breaking the reinforcing fiber into several millimeters, injecting the fiber reinforcing thermoplastic resin to a cavity of the mold, and manufacturing molded parts consisting of the fiber reinforcing thermoplastic resin.

There is known a vertical injection molding machine for equipping a plurality of lower molds on a rotation table, and at a mold opening and closing/injecting stage, clamping an upper mold provided at the mold opening and closing/injecting stage and the lower mold sent to the mold opening and closing/injecting stage, injecting and filling molten resin in the mold after clamping, and at an ejecting stage, ejecting molded parts from the lower mold sent to the ejecting stage. The vertical injection molding machine having such a rotation table is capable of closing mold (clamping mold), injecting, measuring, and opening mold at the mold opening and closing/injecting stage, and of ejecting forward and backward at the ejecting stage at the same time. There can be realized shortening of molding cycle thereby. For example, Patent Document 2 discloses an insert molding, at the ejecting stage of such vertical injection molding machine, after taking out the mold parts, in which loading (mounting/positioning) of an inserting object for insert molding on the lower mold is available.

### [Prior Art]

### [Patent Document]

Patent Document 1: Japanese Patent Laid-Open Publication H11-034131
Patent Document 2: Japanese Patent Laid-Open Publication 2007-055097

### [Problem to be solved by the invention]

As shown in Patent Document 1, there is known a method of obtaining molded parts consisting of fiber reinforcing thermoplastic resin having a relative short fiber of several millimeters. However, when products are obtained which is formed by integrating resin and relative long fibers of such as 50 or more than 100 millimeters, the method of Patent Document 1 is not appropriate because the fibers are broken into several millimeters in a heating cylinder. Furthermore, there can be thought that a long fiber resin sheet which is softened by heat is arranged in a cavity of the mold, resin is injected in the cavity of the mold in which the long fiber resin sheet is provided, and products made by integrating the long fibers and the resin can be obtained. In a common injection molding machine, a movable mold is designed to open and close the mold in a horizontal direction to a fixed mold. Therefore, when the resin to be a product body and the long fiber resin sheet to which the resin is impregnated are integrally molded, the long fiber resin sheet softened by heating should be held while standing at a predetermined position between the fixed mold and the movable mold. In this case, the long fiber resin sheet softened by heating may be bent at upper portion by the gravity and there is a risk to failure in molding thereby.

This invention is made taking the above problems into consideration, and an object of the same is to provide a vertical injection molding machine for suppressing forming defective molded parts in the composite molded parts, when the resin to be a product body and the long fiber resin sheet are integrally molded, and a method of molding the composite molded parts in the vertical injection molding machine.

### [Means for solving the problem]

The invention of a vertical injection molding machine provides a vertical injection molding machine comprising a rotary table rotatably provided in an axial direction as a vertical direction, lower molds provided on an upper surface of the rotary table, and an upper mold for opening and closing said lower molds, a vertical injection molding machine opening and closing mold in a vertical direction, wherein,
a space is formed by said lower molds and said upper mold when said lower molds and said upper mold are closed, a fiber resin base material and resin injected from an injection unit being inserted to said space, and
an upper and a lower directions of said fiber resin base material is matched to a mold opening and closing direction of said upper mold and said lower molds, when a plane surface part of said fiber resin base material faces said lower molds, and when said plane surface part of said fiber resin base material facing said lower molds is defined as a lower surface, and an opposite surface being defined as an upper surface.

The invention of a vertical injection molding machine provides a vertical injection molding machine according to claim 1, comprising a conveying device for mounting said fiber resin base material so that a plane surface part of said fiber resin base material faces said lower molds.

The invention of a vertical injection molding machine provides a vertical injection molding machine according to claim 1 or 2, comprising a heater for heating said fiber resin base material mounted on said lower molds.

The invention of a vertical injection molding machine provides a vertical injection molding machine according to claim 3, wherein
when said fiber resin base material is mounted on said lower molds, said heater is vertically movably provided at a position facing said upper surface of said fiber resin base material.

The invention of a vertical injection molding machine provides a vertical injection molding machine according to any one of claims 1 to 4, wherein said fiber is a glass fiber and/or carbon fiber.

The invention of a vertical injection molding machine provides a method of molding composite molding parts in a vertical injection molding machine according to any one of claims 1 to 5, wherein
after said fiber resin base material is mounted on said lower molds,
said lower molds to which said fiber resin base material is mounted are moved to a clamping position facing said upper mold by rotating said rotary table,
said upper mold and said lower molds are clamped at the mold clamping position, and said fiber resin base material arranged therebetween is pressed and molded to a predetermined shape thereby, and
the resin is injected from an injection unit to a cavity which includes said fiber resin base material molded in a predetermined shape and is formed by clamping said upper mold and said lower molds, and said resin to be a product body which is injected from the injection unit and the fiber resin base material is integrally molded.

The invention of a vertical injection molding machine provides a method of molding composite molding parts in a vertical injection molding machine according to claim 6, wherein said fiber resin base material is mounted on said lower molds by said conveying device.

The invention of a vertical injection molding machine provides a method of molding composite molding parts in a vertical injection molding machine according to claim 6 or 7, wherein
after said fiber resin base material is mounted on said lower molds, said fiber resin base material is heated and softened by said heater provided at a position facing said upper surface of said fiber resin base material,
after that, said lower molds on which said softened fiber resin base material is mounted is moved to a clamping position facing said upper mold by rotating said rotary table.

### [Effect of Invention]

According to the present invention, directions of an upper and a lower surfaces of a fiber resin base material to be mounted on a lower mold are vertical direction. When the fiber resin base material is mounted in a manner that the lower surface of the plane surface part of the fiber resin base material is face contact with the lower mold, the fiber resin base material mounted on the lower mold can be stably held without displacement. Accordingly, when the resin to be a product body which is injected from an injection nozzle and the fiber resin base material are integrally molded, it becomes possible to integrally mold the fiber resin base material at a predetermined position of the product body. Furthermore, when the fiber resin base material mounted on the lower mold is softened by heating by a heater, the softened fiber resin base material is not held while standing as conventional, and it can be avoided to mold defective molded parts due to bending at upper portion of the softened fiber resin base material by the gravity.

As a detail embodiment of the present invention, when the fiber resin base material is a long fiber resin sheet, directions of an upper and a lower surfaces of the long fiber resin sheet to be mounted on a lower mold are vertical direction. When the long fiber resin sheet is mounted in a manner that the lower surface of the plane surface part of the long fiber resin sheet is in face contact with the lower mold, the long fiber resin sheet mounted on the lower mold can be stably held without displacement. Accordingly, when the resin to be the product body which is injected from an injection nozzle and the long fiber resin sheet are integrally molded, it becomes possible to integrally mold the long fiber resin sheet at a predetermined position of the product body. Furthermore, when the long fiber resin sheet mounted on the lower mold is softened by heating by a heater, softened long fiber resin sheet is not held while standing as conventional, and it can be avoided to mold defective molded parts due to bending at upper portion of the softened fiber resin base material by the gravity.

### [Brief Description of Drawings]

Fig. 1 is a front view showing a vertical injection molding machine according to the present invention.
Fig. 2 is a plan view showing a vertical injection molding machine according to the present invention.
Fig. 3 is a left side view of a vertical injection molding machine comprising a robot (not shown) according to the present invention.
Fig. 4 is a perspective view showing a long fiber resin sheet, a product body (thermoplastic resin) and composite molded parts made by integrally molding the product body and the ling fiber resin sheet.
Fig. 5 is an explanatory drawing showing movement of a vertical injection molding machine according to the present invention.

### [Preferred Embodiment]

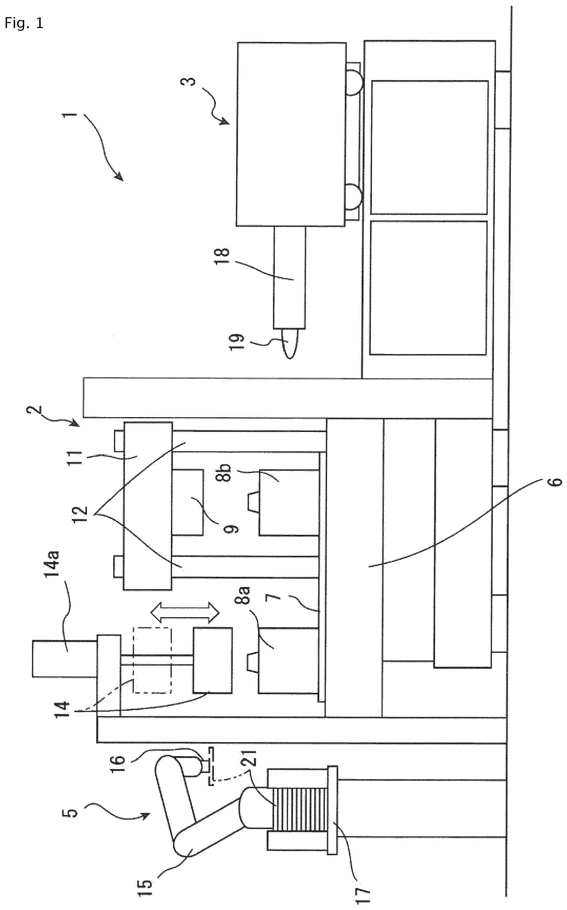

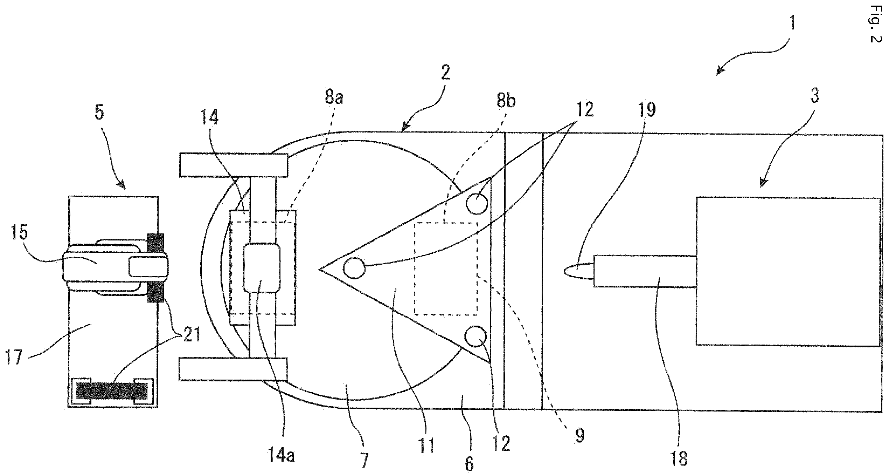

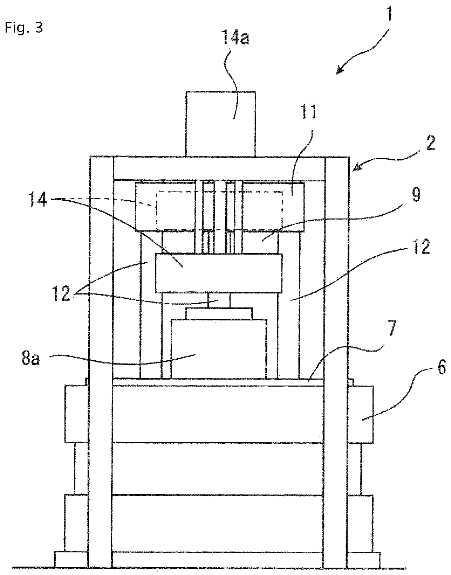

Referring to Figs. 1 to 5, description will be made for some embodiments of the present invention. The present invention can be easily applied to other than that explained in the embodiments within a scope of the invention.

As a vertical injection molding machine 1 according to the present invention, there is described a vertical injection molding machine 1 for injecting and filling resin to be a product body 20 from an injection nozzle 19 to a cavity of a mold against a long fiber resin sheet 21 mounted in the mold, integrally molding the product body resin and the long fiber resin sheet 21, and manufacturing composite molded parts 22, and also described a method of molding the composite molded parts 22 by using the vertical injection molding machine 1. However, limitation is not made to the long fiber resin sheet 21, but a fiber resin base material for molding the composite molded parts 22 may be available.

The fiber resin base material used in the present invention is a mixture base material of a fiber forming composite molding material and resin, and there are included one comprising fibers aligned in one direction and the resin, one comprising fibers aligned in random and resin, and one comprising woven fabric fibers and resin, or the like. The resin may be impregnated in the fibers or may not be, or may be laminated. There are some fiber resin base materials which the resin is impregnated in the fibers, and for example, prepreg can be considered. There are some fiber resin base materials which the resin is not impregnated in the fibers, and for example, nonwoven fabric tangling fibers and fibrous resin is considered.

Hereinbelow, regarding a vertical injection molding machine 1 according to the present invention, a fiber resin base material for forming composite molded parts 22 is described as a long fiber resin sheet, however it is not limited thereto.

According to the embodiments of the vertical injection molding machine 1 according to the present invention, the vertical injection molding machine 1 comprises a rotary table 7 rotatably provided in an axial direction as a vertical direction, lower molds 8a, 8b provided on an upper surface of the rotary table 7, and an upper mold 9 for opening and closing to the lower molds 8a, 8b, and opens and closes mold in a vertical direction. There are provided a conveying device mounted on the lower molds 8a, 8b so as to face plane surface part of the long fiber resin sheet 21, and a heater 14 for heating the long fiber resin sheet 21 mounted on the lower molds 8a, 8b. When the plane surface part of the long fiber resin sheet 21 facing the lower molds 8a, 8b is defined as a lower surface, and an opposite surface is as an upper surface, an upper and a lower directions of the long fiber resin sheet 21 is matched to a mold opening and closing direction of the upper mold 9 and the lower molds 8a, 8b.

Furthermore, according to the embodiments of the vertical injection molding machine 1 of the present invention, the long fiber resin sheet 21 is mounted on the lower molds 8a, 8b and the heater 14 is vertically movably provided at a position facing the upper surface of the long fiber resin sheet 21.

Furthermore, according to the embodiments of the vertical injection molding machine 1 of the present invention, the long fiber resin sheet 21 is formed by impregnating the resin into woven fabrics into which the long fibers are woven and solidifying the same.

Furthermore, according to the embodiments of the vertical injection molding machine 1 of the present invention, the long fiber is a carbon fiber.

Furthermore, according to the embodiments of a method of molding composite molded parts in the vertical injection molding machine 1 of the present invention, after the long fiber resin sheet 21 is mounted on the lower molds 8a, 8b by means of the conveying device, the long fiber resin sheet 21 is heated and softened by the heater 12 provided at a position facing the upper surface of the long fiber resin sheet 21, the lower molds 8a, 8b on which the softened long fiber resin sheet 21 is mounted are moved to a mold clamping position facing the upper mold 9 by rotating the rotary table 7, the upper mold 9 and the lower molds 8a, 8b are clamped at the mold clamping position, and the long fiber resin sheet 21 arranged therebetween is pressed and molded to a predetermined shape thereby. The resin is injected from the injection unit 3 to the cavity, including the long fiber resin sheet 21 molded in a predetermined shape, formed by clamping the upper mold 9 and the lower molds 8a, 8b, and the resin to be a product body which is injected from the injection unit 3 and the long fiber resin sheet 21 is integrally molded.

The vertical injection molding machine 1 according to detailed embodiment of the present invention is designed to open and close the mold in a vertical direction and comprises a clamping unit 2 for opening and closing the mold, an injection unit 3 for injecting thermoplastic resin in the mold provided in the clamping unit 2, and a robot 5 as a conveying device for providing the long fiber resin sheet 21 to the clamping unit 2.

The long fiber resin sheet 21 as a fiber resin base material according to the embodiment is also called as "thermoplastic resin" prepreg sheet, and formed by impregnating the thermoplastic resin into woven fabrics into which the long fibers of carbon fibers are woven and solidifying the same. In the embodiments hereinafter, as the fiber resin base material, the long fiber resin sheet 21 is applied, however, the present invention is not limited to the same.

The clamping unit 2 comprises a rotary table 7 rotatably provided on a machine stand 6, two lower molds 8a, 8b provided on the upper part of the rotary table 7, the upper mold 9 for opening and closing each of the lower molds 8a, 8b, a movable die plate 11 having a lower part on which the upper mold 9 is provided, three tie bars 12 for vertically movably supporting the movable die plate 11,and a toggle link mechanism (not shown) for elevating/lowering the movable die plate 11. The rotary table 7 and the toggle link mechanism are driven by a servo motor (not shown) as a driving source.

As shown in Fig .1, regarding two lower molds 8a, 8b, a fixed mold 9 is arranged above the lower mold 8b so as to face the same, and the vertically movable heater 14 is arranged above the lower mold 8a so as to face the same. The heater 14 comprises an air cylinder 14a and the heater 14 is vertically movably provided by the air cylinder 14a.

The robot 5 comprises a link arm 15 having a plurality of arms and a suction part 16 attached to an end part of the link arm 15, holds the long fiber resin sheet 21 mounted on the stand part 17 at the suction part 16 by using negative pressure, and conveys the long fiber resin sheet 21 to the predetermined position by the link arm 15.

The injection unit 3 comprises a heating cylinder 18 for heating the thermoplastic resin and an injection nozzle 19 fitted on an end portion of the heating cylinder 18, and injects molten thermoplastic resin from a horizontal direction to a cavity formed by clamping the upper mold 9 and the lower molds 8a, 8b.

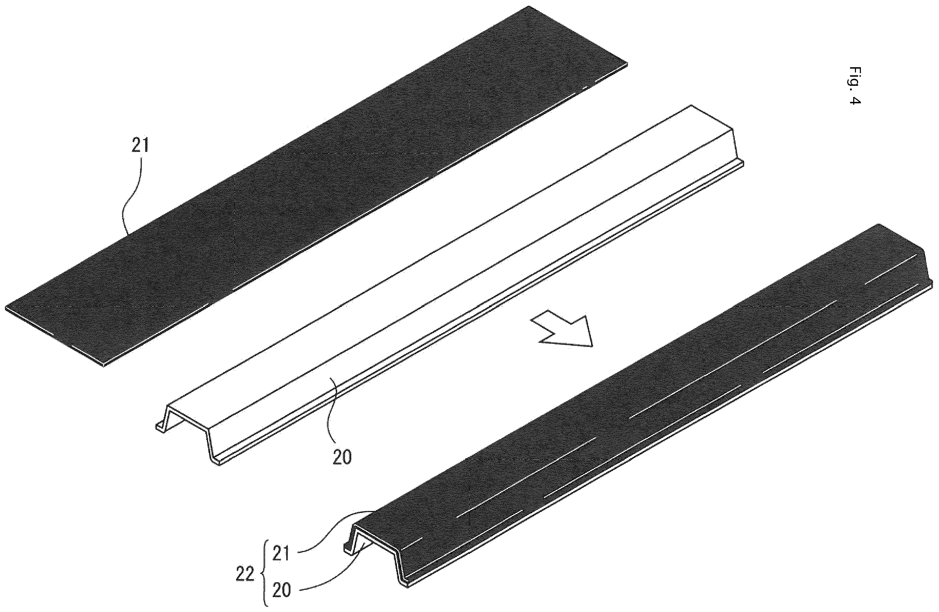

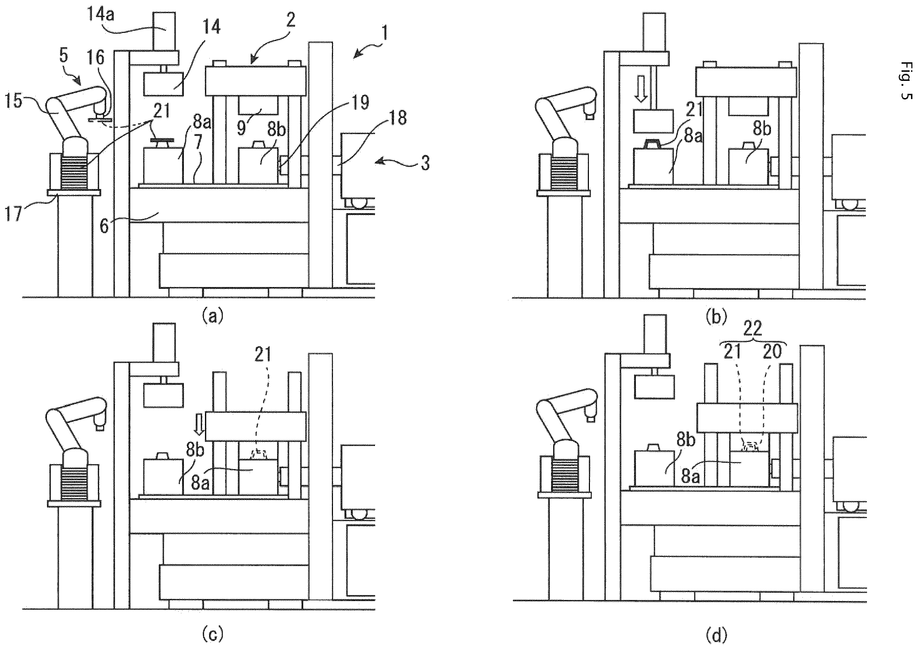

According to the vertical injection molding machine 1 having the above-mentioned structure, referring to Fig. 5, description will be made of an operation for manufacturing composite molded parts 22 by integrally molding (hybrid molding) the thermoplastic resin to be a product body 20 injected to the cavity of the mold shown in Fig. 4 and the long fiber resin sheet 21.

As shown in Fig. 5(a), a sheet of a plurality of long fiber resin sheets on the stand part 17 is held at the suction part 16 of the robot 5, and mounted so that the lower surface of the long fiber resin sheet 21 is in contact with the upper part of the lower mold 8a facing the heater 14. After fixing on the mold, as shown in Fig. 5(b), the heater 14 is lowered close to the long fiber resin sheet 21 by the air cylinder 14a and the long fiber resin sheet 21 is heated and softened by the heater 14. After that, the heater 14 elevates to an original position by the air cylinder 14a.

Next, by rotating the rotary table 7 clockwise at 180°, as shown in Fig 5(c), the lower mold 8a and the lower mold 8b switch positions to each other, the lower mold 8a on which the long fiber resin sheet 21 is attached is disposed at a position desired for the upper mold 9. By lowering and clamping the upper mold 9 toward the lower mold 8a, the long fiber resin sheet 21 arranged between the upper mold 9 and the lower mold 8a is pressed to be molded in a predetermined shape.

Next, as shown in Fig. 5(d), the thermoplastic resin is injected from the injection nozzle 19 of the injection unit 3 to the cavity formed by clamping the upper mold 9 and the lower mold 8a, and the thermoplastic resin to be the product body 20 injected from the injection nozzle 19 and the long fiber resin sheet 21 are integrally molded thereby. After cooling the integrally molded composite molded parts 22, the mold is opened.

By rotating the rotary table 7 counterclockwise at 180°, the lower mold 8a with the composite molded parts 22 returns to the original position desired for the heater 14. After the composite molded parts 22 is left the mold by an ejecting device (not shown), the composite molded parts 22 is taken out by using the suction part 16 of the robot 5. By using two lower molds 8a, 8b alternately, and carrying out a series of operation as mentioned, the composite molded parts 22 to be the product can be mass produced.

As mentioned above, according to the vertical injection molding machine 1 of the embodiment of the present invention, since the upper and lower directions or the long fiber resin sheet 21 mounted on the lower molds 8a, 8b becomes the vertical direction, when the lower surface of the plane surface part of the long fiber resin sheet 21 is in face contact with the lower mold 8a, 8b, the long fiber resin sheet 21 mounted on the lower mold 8a, 8b can be stably held without displacement. When the thermoplastic resin to be the product body 20 which is injected from the injection nozzle 19 and the long fiber resin sheet 21 are integrally molded, it becomes possible to integrally mold the long fiber resin sheet 21 at a predetermined position of the product body 20. Furthermore, when the long fiber resin sheet 21 mounted on the lower mold 8a, 8b is softened by heating by the heater 14, the softened long fiber resin sheet 21 is not held while standing as conventional, and it can be avoided to mold defective molded parts due to bending at upper portion of the softened fiber resin base material by the gravity.

The description is made of one aspect of the embodiments of the present invention, in particular of the embodiment to which the long fiber resin sheet is applied as the fiber resin base material. The present invention should not be limited thereto, and any modification is available within a scope of the invention. For example, according to the present embodiment, two lower molds 8a, 8b are provided on the rotary table 7 in a diameter direction, however three or four lower molds may be provided equidistantly on the rotary table 7.

### [Reference Numerals]

1. vertical injection molding machine
2. clamping unit
3. injection unit
5. robot (conveying device)
6. machine stand
7. rotary table
8a, 8b. lower mold
9. upper mold
11. movable die plate
12. tie bar
14. heater
14a. air cylinder
15. link arm
16. suction part
17. stand part
18. heating cylinder
19. injection nozzle
20. Product body (thermoplastic resin injected to a cavity of mold)
21. long fiber resin sheet (fiber resin base material)
22. composite molded parts

## Claims

1. A vertical injection molding machine comprising a rotary table rotatably provided in an axial direction as a vertical direction, lower molds provided on an upper surface of the rotary table, and an upper mold for opening and closing said lower molds, a vertical injection molding machine opening and closing mold in a vertical direction, wherein,
a space is formed by said lower molds and said upper mold when said lower molds and said upper mold are closed, a fiber resin base material and resin injected from an injection unit being inserted to said space, and
an upper and a lower directions of said fiber resin base material is matched to a mold opening and closing direction of said upper mold and said lower molds, when a plane surface part of said fiber resin base material faces said lower molds, and when said plane surface part of said fiber resin base material facing said lower molds is defined as a lower surface, and an opposite surface being defined as an upper surface.

2. A vertical injection molding machine according to claim 1, comprising a conveying device for mounting said fiber resin base material so that a plane surface part of said fiber resin base material faces said lower molds.

3. A vertical injection molding machine according to claim 1 or 2, comprising a heater for heating said fiber resin base material mounted on said lower molds.

4. A vertical injection molding machine according to claim 3, wherein when said fiber resin base material is mounted on said lower molds, said heater is vertically movably provided at a position facing said upper surface of said fiber resin base material.

5. A vertical injection molding machine according to any one of claims 1 to 4, wherein said fiber is a glass fiber and/or carbon fiber.

6. A method of molding composite molding parts in a vertical injection molding machine described in anyone of claims 1 to 5, wherein
after said fiber resin base material is mounted on said lower molds, said lower molds to which said fiber resin base material is mounted are moved to a clamping position facing said upper mold by rotating said rotary table,
said upper mold and said lower molds are clamped at the mold clamping position, and said fiber resin base material arranged therebetween is pressed and molded to a predetermined shape thereby, and
the resin is injected from an injection unit to a cavity which includes said fiber resin base material molded in a predetermined shape and is formed by clamping said upper mold and said lower molds, and said resin to be a product body which is injected from the injection unit and the fiber resin base material is integrally molded.

7. A method of molding composite molding parts in a vertical injection molding machine according to claim 6, wherein said fiber resin base material is mounted on said lower molds by said conveying device.

8. A method of molding composite molding parts in a vertical injection molding machine according to claim 6 or 7, wherein
after said fiber resin base material is mounted on said lower molds, said fiber resin base material is heated and softened by said heater provided at a position facing said upper surface of said fiber resin base material,
after that, said lower molds on which said softened fiber resin base material is mounted is moved to a clamping position facing said upper mold by rotating said rotary table.
